# EUROPÄISCHE PATENTSCHRIFT

(11) **EP 3 390 251 B1**
(45) Veröffentlichungstag und Bekanntmachung des Hinweises auf die Patenterteilung: **20.09.2023**
(21) Anmeldenummer: 15808426.9
(22) Anmeldetag: 14.12.2015
(51) Int. Cl.: B65G 43/08

(54) **VERFAHREN UND VORRICHTUNG ZUR ÜBERWACHUNG VON LAUFVERHALTEN, ZUSTAND UND/ODER BELADUNG VON GURTBANDFÖRDERERN WÄHREND IHRES BETRIEBS**
METHOD AND APPARATUS FOR MONITORING THE OPERATIONAL BEHAVIOUR, STATE AND/OR LOADING OF BELT CONVEYORS DURING THE OPERATION THEREOF
PROCÉDÉ ET DISPOSITIF DE SURVEILLANCE DU DÉPLACEMENT, DE L'ÉTAT ET/OU DU CHARGEMENT DE CONVOYEURS À COURROIE PENDANT LEUR FONCTIONNEMENT

(43) Veröffentlichungstag der Anmeldung: 24.10.2018
(73) Patentinhaber: Indurad GmbH, 52070 Aachen (DE)
(72) Erfinder: WINKEL, Reik, 52072 Aachen (DE); RABEL, Matthias, 89075 Ulm (DE)
(74) Vertreter: Walther Bayer Faber Patentanwälte PartGmbB
(86) Internationale Anmeldenummer: PCT/EP2015/079611
(87) Internationale Veröffentlichungsnummer: WO 2017/101969

(56) Entgegenhaltungen:
- CN-U- 204 124 749
- DE-A1-102007 044 913
- US-A1- 2012 286 948
- ANDREAS PARR ET AL: "Inverse SAR approach for localization of moving RFID tags", RFID (RFID), 2013 IEEE INTERNATIONAL CONFERENCE ON, IEEE, 30. April 2013 (2013-04-30), Seiten 104-109, XP032431985, DOI: 10.1109/RFID.2013.6548142 ISBN: 978-1-4673-5748-7

## Beschreibung

Die Erfindung betrifft ein Verfahren zur Überwachung des Laufverhaltens und/oder des Zustands und/oder der Beladung von in Betrieb stehenden und mit einem Schüttgut beladbaren Fördergurten bei Gurtbandförderern. Bei einer derartigen Überwachung geht es einerseits um die Sicherstellung eines geradlinigen Verlaufs des Fördergurtes sowie die Kenntnis der Lage des Schüttgutes auf dem Fördergurt und andererseits um die Überwachung des aufgrund des mit der Betriebsdauer zwangsläufig eintretenden Verschleißes des Fördergurtes sich verändernden Zustandes des Fördergurtes, beispielsweise durch Auftreten von Längsrissen, Querrissen oder seitlichen Randeinrissen im Gurt. Ferner ist gegebenenfalls auch eine Kenntnis der Partikelgrößenverteilung in einem die Beladung des Fördergurtes bildenden Schüttgut wünschenswert.

Im Rahmen einer derartigen Überwachung ist zunächst in der DE-A-42 40 094 eine Überwachungseinrichtung beschrieben, dass sowohl der jeweilige momentane Verlauf des Fördergurtes bezüglich der Traggerüste des Gurtbandförderers als auch die genaue Lage des Schüttgutes auf dem Fördergurt bestimmt werden sollen. Damit soll einerseits ein rechtzeitiges Erkennen eines Schieflaufes des Fördergurtes erkennbar sein, um Beschädigungen des Fördergurtes zu vermeiden, und andererseits soll eine gleichmäßige Beladung des Fördergurtes beispielsweise durch eine Aufgabeschurre sichergestellt sein, um zum Beispiel einem Verschleiß des Fördergurtes durch ungleichmäßige Beladung und/oder einer Verschmutzung des Gurtbandförderers durch herabfallendes Schüttgut vorzubeugen. Die bekannte Einrichtung besteht aus einer Lichtquelle, die ein Lichtband auf den Materialstrom projiziert, wobei eine zusätzliche Kamera einen hierdurch abgebildeten Oberkantenverlauf sowohl des Fördergurtes als auch des darauf liegenden Schüttgutes erfasst und anschließend eine zugeordnete Bildauswertungseinheit den Oberkantenverlauf analysiert. Dabei werden die von der Kamera aufgenommenen Bildsignale digitalisiert, so dass jeder Bildpunkt einem Grauton oder Farbton zugeordnet werden kann. Es werden jeweils zwei aufeinander folgende Bilder subtrahiert, wobei in einem derart erfassten Differenzbild begrenzende Bildelemente, wie beispielsweise Seitenkanten des Fördergurtes oder Beladungsgrenzen der Schüttgutauflage zu bildpunktbreiten Linien gebündelt werden. Die wahrscheinlichsten Begrenzungslinien werden als Randlinien des Fördergurtes und des darauf liegenden Schüttgutes ermittelt und zur Bestimmung des Abstandes der Seitenkanten des Fördergurtes zum Traggerüst und zur Bestimmung der jeweiligen Abstände zwischen den Gurtbandkanten und Schüttguträndern verwendet.

Mit der bekannten Einrichtung ist der Nachteil verbunden, dass die Einrichtung sehr aufwendig konzipiert und zudem äußerst störanfällig ist. Es kommt hinzu, dass insbesondere bei einem heterogenen Schüttgut mit kleinen, mittelgroßen oder sehr großen Schüttgutstücken der Oberkantenverlauf der Beladung nur unzureichend zu ermitteln ist. Die Genauigkeit der Bilderfassung ist zudem abhängig von den jeweiligen Umgebungsbedingungen, wie Staubgehalt oder Feuchtigkeitsgehalt in der Umgebungsluft, und insofern ist die Analyse mittels der Bildauswertungseinheit mit großen Fehlerquellen behaftet.

Weiterhin ist hinsichtlich einer Verschleißüberwachung in der DE 100 48 552 A1 ein Verfahren beschrieben, bei welchem in einem Bereich, in welchem keine Schüttgutauflage zu verzeichnen ist, vorzugsweise im Bereich einer Umlenktrommel des Gurtförderers, ein opto-elektronisches System mit einer Kamera installiert ist, die Beschädigungen der Oberfläche des Fördergurtes optisch erfassen soll. Zur gleichzeitigen Lokalisierung einer festgestellten Beschädigung ist ebenfalls vorzugsweise im Bereich der Umlenktrommel ein senkrecht auf die Oberfläche des Fördergurtes ausgerichteter Radarantennenkombination angeordnet, der zusätzlich zu den im Fördergurt einvulkanisierten Festigkeitsträgern in Abständen in Längs- und/oder Querrichtung einvulkanisierte Metallteilchen detektiert.

Mit diesem Stand der Technik ist wiederum der Nachteil verbunden, dass die eigentliche Verschleißüberwachung mittels einer Kamera erfolgt, deren Aufnahmegenauigkeit, insbesondere in Abhängigkeit von den äußeren Betriebsbedingungen, nicht ausreichend ist. Die Radartechnik dient in diesem Zusammenhang lediglich als Hilfsmittel zur Lokalisierung einer von der Kamera aufgenommenen Beschädigung des Fördergurtes.

Die CN 204 124 749 U offenbart eine Einrichtung zur Überwachung des Laufverhaltens und des Zustands von in Betrieb stehenden und mit einem Schüttgut beladbaren Fördergurten bei Gurtbandförderern, wobei an dem Gurtbandförderer wenigstens eine aus mindestens einer Sendeantenne und einer Empfangsantenne bestehende und auf den Fördergurt ausgerichtete Radarantennenkombination vorgesehen ist. Damit ist allerdings die Überwachung auf das Laufverhalten und des Zustandes des Fördergurtes begrenzt. Zur Überwachung kommt ein Ultraschallsensor zum Einsatz, wobei angegeben ist, dass auch ein Radar Sensor eingesetzt werden kann. CN 204 124 749 U offenbart ein Verfahren zur Überwachung des Laufverhaltens oder des Zustands oder der Beladung von in Betrieb stehenden und mit einem Schüttgut beladbaren Fördergurten bei Gurtbandförderern, wobei an dem Gurtbandförderer wenigstens eine aus mindestens einer Sendeantenne und einer Empfangsantenne bestehende und auf den Fördergurt ausgerichtete Radarantennenkombination vorgesehen ist, wobei wenigstens eine Radarantennenkombination seitlich zum Fördergurt angeordnet ist und wobei die seitlich zum Fördergurt angeordnete Radarantennenkombination periodisch die Reflektion ausgesandter Radarstrahlen durch die Seitenkante des Fördergurtes aufnimmt und entsprechende Signale an eine Signalverarbeitungseinheit übermittelt.

Die US 2021/0286948 A1 offenbart eine Einrichtung zur Überwachung des Zustandes eines Fördergurtes von Gurtbandförderern, wofür wenigstens eine Radarantennenkombination mit Abstand zum Fördergurt angeordnet ist und mit ihrem Öffnungswinkel senkrecht auf die Oberfläche des Fördergurtes ausgerichtet ist und periodisch die Reflexion ausgesandter Radarstrahlen einerseits durch die Oberfläche des Fördergurtes und andererseits durch im Fördergurt eingebettete Festigkeitsträger aufnimmt und entsprechende Signale an eine Signalverarbeitungseinheit übermittelt. Auch diese Einrichtung ist auf die Überwachung des Zustandes des Fördergurtes begrenzt.

Der Erfindung liegt daher die Aufgabe zugrunde, ein der Überwachung der genannten Aspekte bei Gurtbandförderern dienendes verbessertes Verfahren anzugeben, dessen Genauigkeit weitgehend unabhängig von den herrschenden Umgebungsbedingungen ist und welches mit robusten, bewährten Komponenten arbeitet.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht hierzu ein Verfahren zur Überwachung von unbeladenen oder mit einem Schüttgut beladenen Fördergurten bei Gurtbandförderern vor, bei welchem an dem Gurtbandförderer wenigstens eine aus mindestens einer Sendeantenne und einer Empfangsantenne bestehende und auf den Fördergurt ausgerichtete erste Radarantennenkombination vorgesehen ist, wobei die wenigstens erste Radarantennenkombination seitlich zum Fördergurt angeordnet ist und mit ihrem Öffnungswinkel schräg von oben auf die zugeordnete Seitenkante des Fördergurtes und auf mindestens einen Teil der daran anschließenden Oberfläche des Fördergurtes ausgerichtet ist und periodisch die Reflexion ausgesandter Radarstrahlen durch die Seitenkante des Fördergurtes und zugleich durch die Beladungsgrenze eines auf den Fördergurt liegenden Schüttgutes aufnimmt und entsprechende Signale an eine Signalverarbeitungseinheit übermittelt und bei welchem in der Signalverarbeitungseinheit der Abstand zwischen der seitlich zum Fördergurt angeordneten Radarantennenkombination und der Seitenkante des Fördergurtes und der Beladungsgrenze ermittelt und mit einem in der Signalverarbeitungseinheit jeweils abgelegten Sollwert verglichen wird.

Zusätzlich kann wenigstens eine zweite Radarantennenkombination mit Abstand zum Fördergurt angeordnet und mit ihrem Öffnungswinkel senkrecht auf die Oberfläche des Fördergurtes ausgerichtet sein und es können ebenfalls entsprechende Signale an eine Signalverarbeitungseinheit übermittelt werden, während die auf die Oberfläche des Fördergurtes ausgerichtete zweite Radarantennenkombination periodisch die Reflektion ausgesandter Radarstrahlen einerseits durch die Oberfläche des Fördergurtes und andererseits durch im Fördergurt eingebettete Festigkeitsträger aufnimmt und entsprechende Signale an eine Signalverarbeitungseinheit übermittelt.

In der Signalverarbeitungseinheit finden eine Analog/Digital-wandlung der empfangenen Signale sowie eine mathematische Signalverarbeitung sowie eine applikationsbezogene Datenaufbereitung bezüglich der empfangenen Signale statt; gleichzeitig dient die Signalverarbeitungseinheit als Schnittstelle zu einem Bediener des Gurtbandförderers oder einer entsprechenden Prozesssteuerung.

Mit der Erfindung ist der Vorteil verbunden, dass die für die unterschiedlichen Überwachungsaspekte gleichermaßen eingesetzte Radartechnik selbst die Überwachungsdaten unmittelbar erzeugt. Dabei liefert die Radartechnik aufgrund des fokussierten Strahlbereichs zuverlässige Messwerte und arbeitet auch mit sehr robusten Komponenten, die unter den oft rauhen Betriebsbedingungen eine zuverlässige Funktion der Radartechnik mit einer ausreichenden Genauigkeit gewährleisten. Insofern ist die Einbeziehung weiterer Überwachungsgeräte wie Kameras etc. nicht erforderlich.

Nach einem Ausführungsbeispiel der Erfindung ist vorgesehen, dass die Radarantennenkombination aus einer Radarantenne mit Sendefunktion und Empfangsfunktion besteht.

Soweit gemäß einer alternativen Ausführungsform der Erfindung die erste Radarantennenkombination, vorzugsweise die zweite Radarantennenkombination aus getrennten Sende- und Empfangsantennen bestehen kann, bzw. können, wobei grundsätzlich zunächst nur eine Sendeantenne und eine Empfangsantenne ausreichend sind, kann nach einem Ausführungsbeispiel der Erfindung vorgesehen sein, dass die erste Radarantennenkombination, vorzugsweise die zweite Radarantennenkombination aus mindestens einer Sendeantenne und einer Mehrzahl von Empfangsantennen besteht, bzw. bestehen. So könnte beispielsweise die auf die Oberfläche des Fördergurtes ausgerichtete zweite Radarantennenkombination eine Sendeantenne und eine Mehrzahl von über die Breite des Fördergurtes verteilt angeordneten Empfangsantennen umfassen. Alternativ könnte vorgesehen sein, dass die erste Radarantennenkombination, vorzugsweise die zweite Radarantennenkombination aus mehreren Sendeantennen und einer Mehrzahl von Empfangsantennen bebesteht, bzw. bestehen. Hier könnten beispielsweise bezüglich der zu überwachenden Breite des Fördergurtes zwei außenliegende Sendeantennen und dazwischen eine zweckmäßige Anzahl von Empfangsantennen angeordnet sein. Die Erfindung ist jedoch nicht auf diese Ausführungsbeispiele beschränkt, sondern umfasst jede beliebige An- und Zuordnung von Sende- und Empfangsantennen.

Nach einem Ausführungsbeispiel der Erfindung kann vorgesehen sein, dass zur Erzeugung der in die erste Radarantennenkombination, vorzugsweise die zweite Radarantennenkombination eingespeisten Signale eine kohärente frequenzmodulierte Signalquelle eingesetzt wird, wie dies dem bekannten Prinzip eines frequenzmodulierten Dauerstrichradars (FM-CW Radar) entspricht. Danach findet jede Messung ausgehend von demselben Ausgangszustand statt, so dass die Abtastzeitpunkte im empfangenen Signal entlang der durchlaufenden FM-CW Rampe stets zum selben Zeitpunkt nach Rampenstart erfolgen. Somit können einzelne Messungen mit hoher Präzision zueinander in Bezug gebracht werden, so dass allgemein gesagt werden kann, dass mithilfe der Phasenzeiger eine hohe Messgenauigkeit erreicht wird.

Weiterhin kann vorgesehen sein, dass zur Erzeugung der Signale die Ultra-Breitband-Radartechnologie eingesetzt wird. Der Einsatz der Radartechnik ermöglicht das Erfassen der Lage der seitlichen Gummikante des Gurtes, der in den Gurt einvulkanisierten Festigkeitsträger und der Oberfläche des auf dem Gurt liegenden Schüttgutes in Form von Peaks. Die Genauigkeit der Trennung der erfassten Peaks im Hinblick auf die Bestimmung des Laufverhaltens und/oder des Gurtzustandes und/oder der Beladung ist abhängig von der Bandbreite des verwendeten Radarsignals. Insoweit ist eine möglichst große Bandbreite von mehr als 5 GHz, vorzugsweise von mehr als 10 GHz anzustreben.

Vorteilhaft für die Ausführung der Erfindung ist nach einem Ausführungsbeispiel der Erfindung, wenn zur Erzielung eines hohen Auflösungsvermögens das Inverse-Synthetic-Aperture-Radar (ISAR)-Prinzip angewendet wird, bei welchem bei ortsfestem Radar die Bewegung des Fördergurtes in dessen Laufrichtung als einer dritten Dimension in die Auswertung der Signale in der Signalverarbeitungseinheit einbezogen wird. Hierbei sollten sich jedenfalls bei Einsatz getrennter Sende- und Empfangsantennen die Ausleuchtzonen der Antennenkeulen wenigstens etwas überlappen. Es werden in äquidistanten Schritten Messungen digital zusammengesetzt, um eine Subpixelauflösung zu erhalten. Dabei ergeben sich mit hoher Messrate eng beieinander liegende Messungen, die jeweils nur wenige Millimeter auseinander liegen. Auf dieser Basis lässt sich durch die Darstellung der Phasenverläufe des komplexen Empfangsspektrums die Oberfläche des Fördergurtes, gegebenenfalls einschließlich seiner Beladung, noch einmal deutlich präziser über die gesamte Länge des Fördergurtes abbilden.

Nach einem Ausführungsbeispiel der Erfindung kann hinsichtlich der Überwachung eines Schieflaufes des Fördergurtes beziehungsweise einer ordnungsgemäßen Beladung des Fördergurtes vorgesehen sein, dass in der Signalverarbeitungseinheit der Abstand zwischen der seitlich zum Fördergurt angeordneten erste Radarantennenkombination und der Seitenkante des und/oder der Beladungsgrenze ermittelt und mit einem in der Signalverarbeitungseinheit jeweils abgelegten Sollwert verglichen wird.

Gemäß einer Weiterbildung der Erfindung kann vorgesehen sein, dass auf beiden Seiten des Fördergurtes schräg von oben auf diesen ausgerichtete erste Radarantennenkombinationen angeordnet sind und periodisch Signale erfassen und an die Signalverarbeitungseinheit übermitteln.

Vorteilhaft ist die Genauigkeit der Lageüberwachung der Seitenkante des Fördergurtes und/oder Beladungsgrenze genauer als 5 mm, vorzugsweise genauer als 1 mm.

Hinsichtlich der Verschleißüberwachung mittels der erfindungsgemäß eingesetzten Radartechnik ist vorgesehen, dass in der Signalverarbeitungseinheit der Abstand zwischen der auf die Oberfläche des Fördergurtes ausgerichteten zweiten Radarantennenkombination und der Oberfläche des Fördergurtes sowie der Abstand zwischen der zweiten Radarantennenkombination und dem im Fördergurt einvulkanisierten Festigkeitsträger ermittelt werden und das Maß des an der Oberfläche des Fördergurtes eintretenden Verschleißes durch das aufliegende Schüttgut aus der Beobachtung der jeweiligen Differenz zwischen den ermittelten Abständen bestimmt wird.

Erfindungsgemäß kann die Erfassung der Signale mit einer Messrate von größer 50 Hz erfolgen.

Entsprechend einem Ausführungsbeispiel der Erfindung kann weiterhin vorgesehen sein, dass in der Signalverarbeitungseinheit aufgrund der von den auf dem Fördergurt liegenden Schüttgutpartikeln reflektierten Signale eine Granulometrie des Schüttgutes durchgeführt wird.

Bezüglich einer Vorrichtung zur Durchführung der Schieflauf - bzw. Beladungsüberwachung mittels Radartechnik ist vorgesehen, dass die erste Radarantennenkombination mittels einer an einem Traggerüst des Gurtbandförderers anzubringenden Halteeinrichtung festgelegt ist, wobei die Halteeinrichtung für eine Höhenverstellung und eine bezogen auf die Vertikale einstellbare Winkelausrichtung der ersten Radarantennenkombination eingerichtet

In Hinblick auf die Durchführung einer Verschleißüberwachung wie auch Überwachung der Zusammensetzung der Beladung kann eine entsprechende Vorrichtung so ausgebildet sein, dass die zweite Radarantennenkombination oder mehrere nebeneinander angeordnete und die Breite des Fördergurtes abdeckende zweiten Radarantennenkombinationen im Bereich einer Antriebstrommel oder Umlenktrommel für den Fördergurt installiert ist bzw. sind.

Alternativ kann vorgesehen sein, dass die zweite Radarantennenkombination oder eine Einheit von mehreren Radarantennenkombinationen periodisch über die Breite des Fördergurtes verfahrbar ist.

In der Zeichnung sind Ausführungsbeispiele der Erfindung wiedergegeben, welche nachstehend beschrieben sind. Es zeigen:
- Fig. 1:: Den Seitenbereich eines Fördergurtes mit einer zugeordneten Radarantennenkombination in einer der Längsrichtung des Fördergurtes entsprechenden Blickrichtung,
- Fig. 2:: eine Seitenansicht des Förderbandes im Bereich einer Umlenktrommel mit einer hier angeordneten Radarantennenkombination in einer schematischen Darstellung.

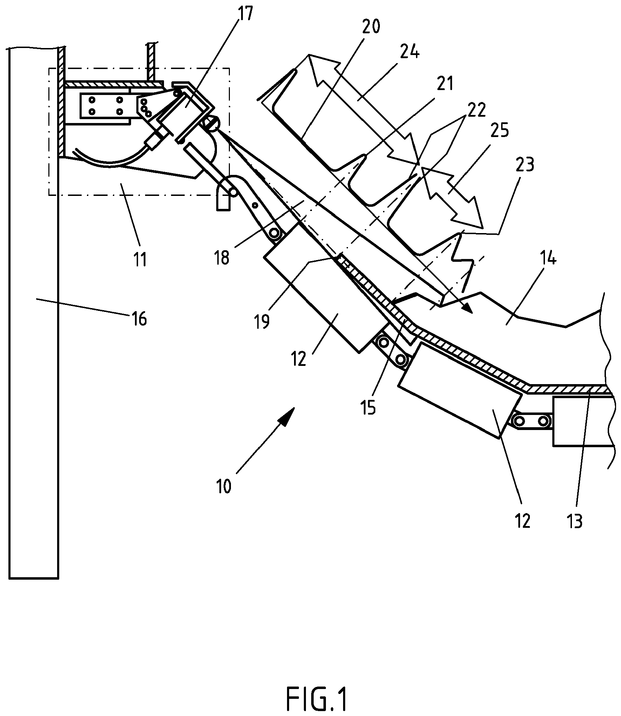

Die aus Figur 1 nur teilweise ersichtliche Darstellung eines Gurtbandförderers 10 zeigt den Teil eines Traggerüstes 11, an welchem eine Girlande von einzelnen Tragrollen 12 aufgehängt ist, auf welchen ein Fördergurt 13 auflagert. Der Fördergurt 13 ist mit einem Schüttgut 14 beladen, wobei die seitliche Beladungsgrenze 15 des Schüttgutes 14 nicht bis an die äußere Seitenkante 19 des Fördergurtes heranreicht, sondern einen Abstand dazu einhält.

An einer am Traggerüst 11 des Gurtbandförderers 10 angebrachten Halteeinrichtung 16 ist eine, aus mindestens einer Sendeantenne und einer Empfangsantenne bestehende erste Radarantennenkombination 17 gehaltert, die mit einem Öffnungswinkel 18 der Radarstrahlen auf die Seitenkante 19 des Fördergurtes 13 ausgerichtet derart, dass der Öffnungswinkel 18 der schräg von oben auf den Fördergurt 13 blickenden erste Radarantennenkombination 17 die zugeordnete Seitenkante 19 des Fördergurtes 13 und mindestens einen Teil der daran anschließenden Oberfläche des Fördergurtes 13 mit einem Teilbereich des darauf liegenden Schüttgutes 14 und der zugehörigen Beladungsgrenze 15 erfasst. Mittels einer zugeordneten, die unterschiedliche Signalintensität der Reflektion der von der erste Radarantennenkombination 17 ausgesandten Radarstrahlen wiedergebenden Reflektionskurve 20 ist die Art der Abstandsbestimmung erkennbar. So zeigt eine erste Spitze 21 der Reflektionskurve 20 das Auftreffen der Radarstrahlen auf die Seitenkante der äußersten Tragrolle 12, wobei diese erste Spitze 21 bei der Auswertung der Reflektionssignale nicht berücksichtigt wird. Die zweite Spitze 22 zeigt die Lage der zugeordneten Seitenkante 19 des Fördergurtes 13 an, woraus der Abstand 24 zwischen der erste Radarantennenkombination 17 und der Seitenkante 19 der Fördergurtes 13 bestimmbar ist. Die dritte Spitze 23 zeigt die Lage der Beladungsgrenze 15 des auf den Fördergurt 13 liegenden Schüttgutes 14 an, so dass aus dem Abstand zwischen der erste Radarantennenkombination 17 und der dritten Spitze 23 beziehungsweise aus dem Abstand zwischen der zweiten Spitze 22 und der dritten Spitze 23 der Abstand 25 zwischen der Seitenkante 19 des Fördergurtes 13 und der Beladungsgrenze 15 ermittelbar ist. Soweit sich aus dem Beladungsquerschnitt des auf dem Fördergurt 13 liegenden Schüttgutes 14 noch weitere Reflektionsspitzen ergeben, brauchen diese zunächst nicht weiter berücksichtigt werden. Allerdings können mit einem größeren Beladungsquerschnitt auch diese Reflektionsspitzen noch herangezogen werden um festzustellen, wie hoch die Beladung des Fördergurtes 13 mit Schüttgut 14 verwirklicht ist.

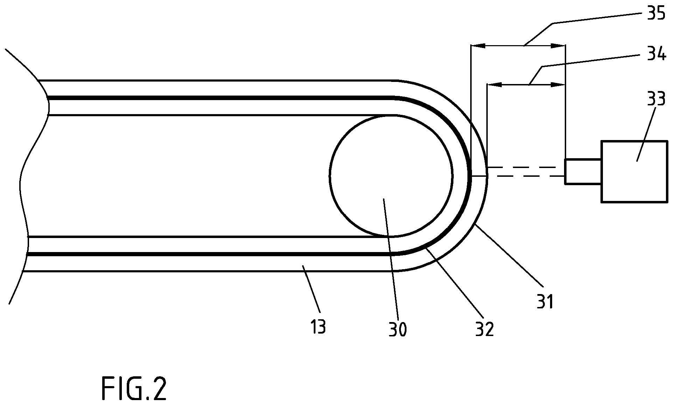

Soweit in Figur 2 schematisch die Erfassung von Signalen für eine Verschleißüberwachung dargestellt ist, ist im Bereich einer Umlenktrommel 30 für den Fördergurt 13 eine senkrecht auf die Oberfläche 31 des über die Umlenktrommel 30 geführten Fördergurtes 13 ausgerichtete zweite Radarantennenkombination 33 angeordnet. Die von der zweite Radarantennenkombination 33 ausgesandten Radarstrahlen werden zum einen von der Oberfläche 31 des Fördergurtes 13 reflektiert, so dass ein Abstand 34 zwischen der Oberfläche 31 des Fördergurtes 13 und der zweite Radarantennenkombination 33 ermittelt werden kann. Gleichzeitig dringen die ausgesandten Radarstrahlen auch in das Material des Fördergurtes 13 ein und werden hier von den in dem Fördergurt 13 über dessen Breite verteilt einvulkanisierten Festigkeitsträgern 32 reflektiert, so dass auch ein Abstand 35 zwischen den Festigkeitsträgern 32 und der zweite Radarantennenkombination 33 zu ermitteln ist. Aus der Differenz dieser beiden Abstände 34 und 35 lässt sich die Materialstärke des oberhalb der Festigkeitsträger 32 bis zu der ein Schüttgut tragenden Oberfläche 31 des Fördergurtes 13 anstehenden Materials ermitteln. Soweit im Wege einer fortlaufenden oder von Zeit zu Zeit durchgeführten Überwachung der entsprechenden Abstandsdifferenz Veränderungen in dieser Abstandsdifferenz festgestellt werden, lassen diese Veränderungen einen Rückschluss auf einen gegebenenfalls fortschreitenden Verschleiß des Fördergurtes 13 zu.

## Patentansprüche

1. Verfahren zur Überwachung des Laufverhaltens und/oder des Zustands und/oder der Beladung von in Betrieb stehenden und mit einem Schüttgut (14) beladenen Fördergurten (13) bei Gurtbandförderern (10), wobei an dem Gurtbandförderer (10) wenigstens eine aus mindestens einer Sendeantenne und einer Empfangsantenne bestehende und auf den Fördergurt (13) ausgerichtete erste Radarantennenkombination (17) vorgesehen ist, wobei
- die wenigstens erste Radarantennenkombination (17) seitlich zum Fördergurt (13) angeordnet ist und mit ihrem Öffnungswinkel (18) schräg von oben auf die zugeordnete Seitenkante (19) des Fördergurtes (13) und auf mindestens einen Teil der sich daran anschließenden Oberfläche des Fördergurtes (13) ausgerichtet ist und periodisch die Reflexion ausgesandter Radarstrahlen durch die Seitenkante (19) des Fördergurtes (13) und durch die Beladungsgrenze (15) eines auf den Fördergurt (13) liegenden Schüttgutes aufnimmt und entsprechende Signale an eine Signalverarbeitungseinheit übermittelt,
- bei welchem in der Signalverarbeitungseinheit der Abstand zwischen der seitlich zum Fördergurt (13) angeordneten erste Radarantennenkombination (17) und der Seitenkante (19) des Fördergurtes (13) und der Beladungsgrenze (15) ermittelt und mit einem in der Signalverarbeitungseinheit jeweils abgelegten Sollwert verglichen wird, und bei welchem vorzugsweise wenigstens eine zweite Radarantennenkombination (33) mit Abstand zum Fördergurt (13) angeordnet ist und mit ihrem Öffnungswinkel senkrecht auf die Oberfläche des Fördergurtes (13) ausgerichtet ist und periodisch die Reflexion ausgesandter Radarstrahlen einerseits durch die Oberfläche (31) des Fördergurtes (13) und andererseits durch im Fördergurt (13) eingebettete Festigkeitsträger (32) aufnimmt und entsprechende Signale an eine Signalverarbeitungseinheit übermittelt.

2. Verfahren nach Anspruch 1, bei welchem die erste Radarantennenkombination, vorzugsweise die zweite Radarantennenkombination (17, 33) aus einer Radarantenne mit Sendefunktion und Empfangsfunktion besteht, bzw. bestehen.

3. Verfahren nach Anspruch 1,bei welchem die erste Radarantennenkombination, vorzugsweise die zweite Radarantennenkombination (17, 33) aus mindestens einer Sendeantenne und einer Mehrzahl von Empfangsantennen besteht oder bei welchem die erste Radarantennenkombination, vorzugsweise die zweite Radarantennenkombination 17, 33) aus mehreren Sendeantennen und einer Mehrzahl von Empfangsantennen besteht, bzw. bestehen.

4. Verfahren nach einem der Ansprüche 1 bis 3, bei welchem zur Erzeugung der in die erste Radarantennenkombination, vorzugsweise in die zweite Radarantennenkombination (17, 33) eingespeisten Signale eine kohärente frequenzmodulierte Signalquelle eingesetzt wird.

5. Verfahren nach einem der Ansprüche 1 bis 4, bei welchem zur Erzeugung der in die erste Radarantennenkombination, vorzugsweise in die zweite Radarantennenkombination eingespeisten Signale die Ultra-Breitband-Radartechnologie eingesetzt wird.

6. Verfahren nach einem der Ansprüche bis 5, bei welchem zur Erzielung eines hohen Auflösungsvermögens das Inverse-Synthetic-Aperture-Radar (ISAR)-Prinzip angewendet wird.

7. Verfahren nach einem der Ansprüche 1 bis 6, bei welchem jede erste Radarantennenkombination (17) rechtwinklig zur Längsachse des Fördergurtes (13) ausgerichtet ist.

8. Verfahren nach einem der Ansprüche 1 bis 7, bei welchem auf beiden Seiten des Fördergurtes (13) schräg von oben auf diesen ausgerichtete erste Radarantennenkombinationen (17) angeordnet sind und periodisch Signale erfassen und an die Signalverarbeitungseinheit übermitteln.

9. Verfahren nach einem der Ansprüche 1 bis 8, bei welchem die Erfassung der Signale mit einer Messrate größer 50 Hz erfolgt.

10. Verfahren nach einem der vorangehenden Ansprüche, bei welchem in der Signalverarbeitungseinheit der Abstand (34) zwischen der auf die Oberfläche des Fördergurtes (13) ausgerichteten zweite Radarantennenkombination (33) und der Oberfläche (31) des Fördergurtes (13) sowie der Abstand (35) zwischen der zweiten Radarantennenkombination (33) und dem im Fördergurt einvulkanisierten Festigkeitsträger (32) ermittelt werden und das Maß des an der Oberfläche (31) des Fördergurtes (13) eintretenden Verschleißes durch das aufliegende Schüttgut aus der Beobachtung der jeweiligen Differenz zwischen den ermittelten Abständen (34, 35) bestimmt wird.

11. Verfahren nach einem der vorangehenden Ansprüche, bei welchem in der Signalverarbeitungseinheit aufgrund der von den auf dem Fördergurt (13) liegenden Schüttgutpartikeln reflektierten Signale eine Granulometrie des Schüttgutes durchgeführt wird.

12. Vorrichtung zur Durchführung des Verfahrens nach einem der Ansprüche 1 bis 11, umfassend einen in Betrieb stehenden Gurtbandförderer (10) mit einem mit Schüttgut (14) beladenen Fördergurt (13), wobei an dem Gurtbandförderer (10) wenigstens eine aus mindestens einer Sendeantenne und einer Empfangsantenne bestehende und auf den Fördergurt (13) ausgerichtete erste Radarantennenkombination (17) vorgesehen ist, und wobei wenigstens die erste Radarantennenkombination (17) seitlich zum Fördergurt (13) angeordnet ist und mit ihrem Öffnungswinkel (18) schräg von oben auf die zugeordnete Seitenkante (19) des Fördergurtes (13) und auf mindestens einen Teil der sich daran anschließenden Oberfläche des Fördergurtes (13) ausgerichtet ist, und bei welcher Vorrichtung die erste Radarantennenkombination (17) mittels einer an einem Traggerüst (11) des Gurtbandförderers (10) anzubringenden Halteeinrichtung (16) festgelegt ist, wobei die Halteeinrichtung (16) für eine Höhenverstellung und eine bezogen auf die Vertikale einstellbare Winkelausrichtung der ersten Radarantennenkombination (17) eingerichtet ist, wobei die Vorrichtung ferner eine Signalverarbeitungseinheit umfasst, die dazu ausgebildet ist, den Abstand zwischen der seitlich zum Fördergurt (13) angeordneten ersten Radarantennenkombination (17) und der Seitenkante (19) des Fördergurtes (13) und der Beladungsgrenze (15) zu ermitteln und mit einem in der Signalverarbeitungseinheit jeweils abgelegten Sollwert zu vergleichen, und bei welcher vorzugsweise wenigstens eine zweite Radarantennenkombination (33) mit Abstand zum Fördergurt (13) angeordnet ist und mit ihrem Öffnungswinkel senkrecht auf die Oberfläche des Fördergurtes (13) ausgerichtet ist und periodisch die Reflexion ausgesandter Radarstrahlen einerseits durch die Oberfläche (31) des Fördergurtes (13) und andererseits durch im Fördergurt (13) eingebettete Festigkeitsträger (32) aufnimmt und entsprechende Signale an eine Signalverarbeitungseinheit übermittelt.

13. Vorrichtung nach Anspruch 12, welcher die zweite Radarantennenkombination (33) odèr mehrere nebeneinander angeordnete und die Breite des Fördergurtes (13) abdeckende zweiten Radarantennenkombinationen (33) im Bereich einer Antriebstrommel oder Umlenktrommel (30) für den Fördergurt (13) installiert ist bzw. sind.

14. Vorrichtung nach Anspruch 12, bei welcher die zweite Radarantennenkombination (33) oder eine Einheit von mehreren zweiten Radarantennenkombinationen (33) periodisch über die Breite des Fördergurtes (13) verfahrbar ist.

## Claims

1. A method of monitoring the running behavior and/or the state and/or the load of conveyor belts (13) in operation and loaded with a bulk material (14) in belt conveyors (10), wherein at least one first radar antenna combination (17) is provided at the belt conveyor (10), said first radar antenna combination (17) comprising at least one transmission antenna and one reception antenna and being oriented on the conveyor belt (13), wherein the at least first radar antenna combination (17) is arranged laterally of the conveyor belt (13) and its aperture angle (18) is aligned obliquely from above to the associated side edge (19) of the conveyor belt (13) and to at least some of the adjoining surface of the conveyor belt (13); and periodically records the reflection of transmitted radar beams through the side edge (19) of the conveyor belt (13) and through the load boundary (15) of a bulk material disposed on the conveyor belt (13) and transmits corresponding signals to a signal processing unit,
- in which the distance between the first radar antenna combination (17) arranged laterally of the conveyor belt (13) and the side edge (19) of the conveyor belt (13) and of the load boundary (15) is determined in the signal processing unit and is compared with a desired value respectively stored in the signal processing unit; and
- in which preferably at least one second radar antenna combination (33) is arranged at a distance from the conveyor belt (13) and its aperture angle is oriented on the surface (31) of the conveyor belt (13) and periodically records the reflection of transmitted radar beams by the surface (31) of the conveyor belt (13), on the one hand, and by reinforcement materials (32) embedded in the conveyor belt (13), on the other hand, and transmits corresponding signals to a signal processing unit.

2. A method in accordance with claim 1, in which the first radar antenna combination preferably the second radar antenna combination (17, 33) comprises/comprise a radar antenna with a transmission function and a reception function.

3. A method in accordance with claim 1, in which the first radar antenna combination preferably the second radar antenna combination (17, 33) comprises/comprise at least one transmission antenna and a plurality of reception antennas; or in which the first radar antenna combination preferably the second radar antenna combination (17, 33) comprises/comprise a plurality of transmission antennas and a plurality of reception antennas.

4. A method in accordance with one of the claims 1 to 3, in which a coherent frequency modulated signal source is used to generate the signals fed into the first radar antenna combination preferably into the second radar antenna combination (17, 33).

5. A method in accordance with one of the claims 1 to 4, in which ultra broadband radar technology is used to generate the signals fed into the first radar antenna combination preferably into the second radar antenna combination (17, 33).

6. A method in accordance with one of the claims 1 to 5, in which the inverse synthetic aperture radar (ISAR) principle is used to achieve a high resolution.

7. A method in accordance with one of the claims 1 to 6, in which every radar antenna combination (17) is aligned at a right angle to the longitudinal axis of the conveyor belt (13).

8. A method in accordance with one of the claims 1 to 7, in which first radar antenna combinations (17) aligned obliquely from above to the conveyor belt (13) are arranged at both sides thereof and periodically detect signals and transmit them to the signal processing unit.

9. A method in accordance with one of the claims 1 to 8, in which the detection of the signals takes place with a sampling rate of more than 50 Hz.

10. A method in accordance with one of the preceding claims, in which the distance between the second radar antenna combination (33) aligned to the surface of the conveyor belt (13) and the surface (31) of the conveyor belt (13) and the distance between the second radar antenna combination (33) and the reinforcement material (32) vulcanized in the conveyor belt are determined in the signal processing unit and the measure of the wear occurring at the surface (31) of the conveyor belt (13) due to the disposed bulk material is determined from the observation of the respective difference between the determined distances (34, 35).

11. A method in accordance with one of the preceding claims, in which a granulometry of the bulk material is carried out on the basis of the signals reflected by the bulk material particles disposed on the conveyor belt (13).

12. An apparatus for carrying out the method in accordance with one of the claims 1 to 11 comprising a belt conveyor (10) in operation and having a conveyor belt (13) loaded with bulk goods (14), wherein at least one first radar antenna combination (17) is provided at the belt conveyor (10) and comprises at least one transmission antenna and one reception antenna and being oriented on the conveyor belt (13), and wherein at least the first radar antenna combination (17) is arranged laterally of the conveyor belt (13) and its aperture angle (18) is aligned obliquely from above to the associated side edge (19) of the conveyor belt (13) and to at least some of the adjoining surface of the conveyor belt (13); and in which apparatus the first radar antenna combination (17) is fixed by means of a holding apparatus (16) to be attached to a carrier framework (11) of the belt conveyor (10), with the holding apparatus (16) being configured for a vertical adjustment and an angular alignment of the first radar antenna combination (17) adjustable with respect to the vertical; wherein the apparatus further comprises a signal processing unit that is configured to determine the distance between the first radar antenna combination (17) arranged laterally of the conveyor belt (13) and the side edge (19) of the conveyor belt (13) and the load boundary (15) and to compare it with a desired value respectively stored in the signal processing unit; and in which preferably at least one second radar antenna combination (33) is arranged at a distance from the conveyor belt (13) and its aperture angle is oriented perpendicular to the surface of the conveyor belt (13) and periodically records the reflection of transmitted radar beams through the surface (31) of the conveyor belt (13), on the one hand, and reinforcement materials (32) embedded in the conveyor belt (13), on the other hand, and transmits corresponding signals to a signal processing unit

13. An apparatus in accordance with claim 12, in which the second radar antenna combination (33) or a plurality of second radar antenna combinations (33) arranged next to one another and covering the width of the conveyor belt (13) is/are installed in the region of a drive pulley or bend pulley (30) for the conveyor belt (13).

14. An apparatus in accordance with claim 12, in which the second radar antenna combination (33) or a unit of a plurality of second radar antenna combinations (33) is periodically travelable over the width of the conveyor belt (13).

## Revendications

1. Procédé de surveillance du déplacement et/ou de l'état et/ou du chargement de courroies de convoyeur (13), en fonctionnement et chargées de matières en vrac (14), dans des convoyeurs à courroie (10), au moins une première combinaison d'antennes radar (17) constituée d'au moins une antenne émettrice et une antenne réceptrice et orientée vers la courroie de convoyeur (13) étant prévue sur le convoyeur à courroie (10), dans lequel
- l'au moins une première combinaison d'antennes radar (17) est disposée latéralement par rapport à la courroie de convoyeur (13) et orientée avec son angle d'ouverture (18) en oblique du haut vers le bord latéral (19) associé de la courroie de convoyeur (13) et vers au moins une partie de la surface de la courroie de convoyeur (13) adjacente à celui-ci et capte périodiquement la réflexion, par le bord latéral (19) de la courroie de convoyeur (13) et par la limite de chargement (15) de matières en vrac se trouvant sur la courroie de convoyeur (13), de faisceaux radar émis et transmet des signaux correspondants à une unité de traitement de signaux,
- dans lequel la distance entre la première combinaison d'antennes radar (17) disposée latéralement par rapport à la courroie de convoyeur (13) et le bord latéral (19) de la courroie de convoyeur (13) et la limite de chargement (15) est déterminée dans l'unité de traitement de signaux et comparée avec une valeur de consigne stockée respectivement dans l'unité de traitement de signaux, et
- dans lequel, de préférence, au moins une seconde combinaison d'antennes radar (33) est disposée à distance de la courroie de convoyeur (13) et orientée avec son angle d'ouverture perpendiculaire à la surface de la courroie de convoyeur (13) et capte périodiquement la réflexion, d'une part par la surface (31) de la courroie de convoyeur (13) et d'autre part par des supports de renforcement (32) enrobés dans la courroie de convoyeur (13), de faisceaux radar émis et transmet des signaux correspondants à une unité de traitement de signaux.

2. Procédé selon la revendication 1, dans lequel la première combinaison d'antennes radar, de préférence la seconde combinaison d'antennes radar (17, 33) est constituée ou sont constituées d'une antenne radar avec fonction d'émission et fonction de réception.

3. Procédé selon la revendication 1, dans lequel la première combinaison d'antennes radar, de préférence la seconde combinaison d'antennes radar (17, 33) est constituée d'au moins une antenne émettrice et une pluralité d'antennes réceptrices ou dans lequel la première combinaison d'antennes radar, de préférence la seconde combinaison d'antennes radar (17, 33) est constituée ou sont constituées de plusieurs antennes émettrices et d'une pluralité d'antennes réceptrices.

4. Procédé selon l'une des revendications 1 à 3, dans lequel, pour générer les signaux introduits dans la première combinaison d'antennes radar, de préférence dans la seconde combinaison d'antennes radar (17, 33), une source de signaux à modulation cohérente de fréquence est utilisée.

5. Procédé selon l'une des revendications 1 à 4, dans lequel, pour générer les signaux introduits dans la première combinaison d'antennes radar, de préférence dans la seconde combinaison d'antennes radar, la technologie radar à ultralarge bande est utilisée.

6. Procédé selon l'une des revendications 1 à 5, dans lequel, pour obtenir une haute capacité de résolution, le principe du radar à synthèse d'ouverture inverse (ISAR) est appliqué.

7. Procédé selon l'une des revendications 1 à 6, dans lequel chaque première combinaison d'antennes radar (17) est orientée à angle droit par rapport à l'axe longitudinal de la courroie de convoyeur (13).

8. Procédé selon l'une des revendications 1 à 7, dans lequel des premières combinaisons d'antennes radar (17) sont disposées des deux côtés de la courroie de convoyeur (13), orientées en oblique du haut vers celle-ci et détectent périodiquement des signaux et les transmettent à l'unité de traitement de signaux.

9. Procédé selon l'une des revendications 1 à 8, dans lequel la détection des signaux est effectuée avec une fréquence de mesure supérieure à 50 Hz.

10. Procédé selon l'une des revendications précédentes, dans lequel la distance (34) entre la seconde combinaison d'antennes radar (33) orientée vers la surface de la courroie de convoyeur (13) et la surface (31) de la courroie de convoyeur (13) ainsi que la distance (35) entre la seconde combinaison d'antennes radar (33) et le support de renforcement (32) vulcanisé dans la courroie de convoyeur sont déterminées dans l'unité de traitement de signaux et la mesure de l'usure se produisant sur la surface (31) de la courroie de convoyeur (13) par les matières en vrac reposant dessus est déterminée à partir de l'observation de la différence respective entre les distances (34, 35) déterminées.

11. Procédé selon l'une des revendications précédentes, dans lequel une granulométrie des matières en vrac est effectuée dans l'unité de traitement de signaux sur la base des signaux réfléchis par les particules de matières en vrac se trouvant sur la courroie de convoyeur (13).

12. Dispositif destiné à exécuter le procédé selon l'une des revendications 1 à 11, comprenant un convoyeur à courroie (10) en fonctionnement avec une courroie de convoyeur (13) chargée de matières en vrac (14), dans lequel au moins une première combinaison d'antennes radar (17) constituée d'au moins une antenne émettrice et une antenne réceptrice et orientée vers la courroie de convoyeur (13) est prévue sur le convoyeur à courroie (10), et dans lequel au moins la première combinaison d'antennes radar (17) est disposée latéralement par rapport à la courroie de convoyeur (13) et est orientée avec son angle d'ouverture (18) en oblique du haut vers le bord latéral (19) associé de la courroie de convoyeur (13) et vers au moins une partie de la surface de la courroie de convoyeur (13) adjacente à celui-ci, et dans lequel dispositif la première combinaison d'antennes radar (17) est fixée au moyen d'un système de maintien (16) à monter sur une structure porteuse (11) du convoyeur à courroie (10), le système de maintien (16) étant configuré pour un réglage en hauteur et une orientation angulaire de la première combinaison d'antennes radar (17) qui peut être réglée par rapport à la verticale, le dispositif comprenant en outre une unité de traitement de signaux, qui est conçue pour déterminer la distance entre la première combinaison d'antennes radar (17) disposée latéralement par rapport à la courroie de convoyeur (13) et le bord latéral (19) de la courroie de convoyeur (13) et la limite de chargement (15) et la comparer avec une valeur de consigne stockée respectivement dans l'unité de traitement de signaux, et dans lequel de préférence au moins une seconde combinaison d'antennes radar (33) est disposée à distance de la courroie de convoyeur (13) et orientée avec son angle d'ouverture perpendiculaire à la surface de la courroie de convoyeur (13) et capte périodiquement la réflexion, d'une part par la surface (31) de la courroie de convoyeur (13) et d'autre part par des supports de renforcement (32) enrobés dans la courroie de convoyeur (13), de faisceaux radar émis et transmet des signaux correspondants à une unité de traitement de signaux.

13. Dispositif selon la revendication 12, dans lequel la seconde combinaison d'antennes radar (33) ou plusieurs secondes combinaisons d'antennes radar (33) disposées les unes à côté des autres et couvrant la largeur de la courroie de convoyeur (13) est installée ou sont installées dans la zone d'un tambour d'entraînement ou tambour de renvoi (30) pour la courroie de convoyeur (13).

14. Dispositif selon la revendication 12, dans lequel la seconde combinaison d'antennes radar (33) ou une unité de plusieurs secondes combinaisons d'antennes radar (33) peut être déplacée périodiquement sur la largeur de la courroie de convoyeur (13).
